(19) Europäisches Patentamt
European Patent Office
Office européen des brevets

(11) **EP 4 036 836 A1**

(12) **EUROPEAN PATENT APPLICATION**

(43) Date of publication:
**03.08.2022 Bulletin 2022/31**

(21) Application number: **21218418.8**

(22) Date of filing: **30.12.2021**

(51) International Patent Classification (IPC):
**G06Q 50/02** (2012.01)    **G06Q 10/06** (2012.01)
**A01B 79/00** (2006.01)

(52) Cooperative Patent Classification (CPC):
**G06Q 50/02; G06Q 10/063;** A01B 79/005

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2021  CN 202110128125**

(71) Applicant: **FJ Dynamics Co., Ltd.**
**Shenzhen, Guangdong 518000 (CN)**

(72) Inventors:
• **MENG, Guiping**
  **Shenzhen, 518000 (CN)**

• **WANG, Gaodong**
  **Shenzhen, 518000 (CN)**
• **SUN, Bei**
  **Shenzhen, 518000 (CN)**
• **DING, Ji**
  **Shenzhen, 518000 (CN)**
• **WU, Di**
  **Nanjing, 210001 (CN)**

(74) Representative: **Zaboliene, Reda**
**Metida**
**Business center Vertas**
**Gyneju str. 16**
**01109 Vilnius (LT)**

(54) **METHOD, SYSTEM FOR CALCULATING OPERATION ACRES OF AGRICULTURAL MACHINERY**

(57)     A method for calculating areas of farmable land for the working of agricultural machinery, obtains data as to specific locations and data as to time-points of agricultural machinery within a time period when working normally, and processes and cleans the data time-point data to remove data of location and time-points which are time-point data not in a normal operation state because of repeated traverses and time spent in non-operating states. The electronic device clusters and segments the location and time-points data and time-point data distinguishes between time-point data of the agricultural machinery in a normal operation state and data in non-operating or repeating states. The location and time-points time-point data of the agricultural machinery in the normal operation state are retained. The electronic device generates polygons based on the retained time-point data and calculates operable areas according to the polygons.

(A) obtaining coordinate data of the agricultural machinery and time data of the agricultural machinery corresponding to the coordinate data within a time period

(B) cleaning the coordinate data of the agricultural machine and the time data of the agricultural machine and removing the coordinate data and the time data of the agricultural machinery not working in an operation state

(C) clustering and segmenting the coordinate data and the time data after cleaning, distinguishing the coordinate data and the time data of the agricultural machinery working in an operation state and a non-operation state, and retaining the coordinate data and the time data of the agricultural machinery working in the operation state

(D) generating a plurality of polygons based on the coordinate data and the time data of the agricultural machinery working in the operation state, and calculating operation acres of the agricultural machinery according to the plurality of the polygons

FIG. 1

EP 4 036 836 A1

## Description

This application claims priority to Chinese Patent Application No. 202110128125.2 filed on January 29, 2021, the contents of which are incorporated by reference herein.

## FIELD

The present disclosure relates to agriculture, especially relates to a method for calculating operation acres of agricultural machinery, and a system using the same.

## BACKGROUND

Accurate calculation of land areas which may be cultivated with agricultural machinery is important. Government subsidies, cost settlement of agricultural machinery operators, and national agricultural data statistics are all closely related to the operable acres of agricultural machinery. In prior art, the calculation of operation acres of agricultural machinery mainly adopts a manual measurement method and a sensor automatic measurement method, but both methods have many problems in actual operation.

Specifically, the manual measurement method includes a tape measurement method and a manual dot measurement. The tape measurement method means that operators use a tape to measure around the operable areas to obtain length and width of the operation area, and obtain a number of acres of the operation area. The tape measurement method not only consumes manpower, but also is only suitable for small operation areas with regular shapes. When measuring irregular areas, the calculation is cumbersome and there are large errors. The manual dot measurement method refers to the operator using an acre counter to calculate the acres of the operation area by using GPS data. It is suitable for measuring the operation area with various shapes and larger areas. However, the manual dot measurement method needs manual management, which increases operators' workload, and the measurement speed is slow.

In addition, an automatic measurement method includes an odometer measurement method and a positioning navigation measurement method. The odometer measurement method refers to installing an odometer on an agricultural machinery, using the odometer to obtain driving mileage of the agricultural machinery, and multiplying the mileage by an operating width of the agricultural machinery to measure the operation acres of the agricultural machinery. The odometer measurement method does not need manual operation, and has a fast calculation speed, but measurement accuracy is low. Because there are repeated operations and non-straight lines in the movements of the agricultural machinery, there will be large errors in the odometer itself. Therefore, there is a great difference between the operation acres calculated by using the mileage meter to obtain the driving mileage of agricultural machinery and the actual operation acres of the agricultural machinery. The positioning navigation measurement method refers to installing a positioning and navigation system on the agricultural machinery, such as GPS and Beidou, to calculate the driving mileage of the agricultural machinery, and multiply it by the operating width of the agricultural machinery to measure the operation acres of the agricultural machinery. However, the positioning navigation measurement method has the same problems as the odometer measurement method, the method does not distinguish between the driving mileage in a working state, in repeated traverses in the working state, and in a non-working state. Therefore, a calculated operation acres measured by the positioning and navigation method will be larger than the actual operation acres of the agricultural machinery.

## SUMMARY

The present disclosure provides a method for calculating operation acres of agricultural machinery, and an electronic device using the same, wherein the method can accurately calculate the operation acres of agricultural machinery, with simple algorithm, small error, and wide range of application.

The present disclosure further provides an electronic device, the electronic device uses the method to distinguish between states of the agricultural machinery when in a normal operation state, in a repeated operation state, and in a non-operation state, and only the data of the agricultural machinery working in operation state is calculated, so as to minimize the difference between the operation acres calculated by the method and the actual operation acres.

The present disclosure further provides a method for calculating operating acres of agricultural machinery and an electronic device using the same, wherein in the method, the states of the agricultural machinery are automatically distinguished according to coordinate data of the agricultural machinery and corresponding time-point data, for example, the coordinate data of the agricultural machinery includes, but is not limited to, longitude coordinates and latitude coordinates.

The present disclosure further provides a method for calculating operating acres of agricultural machinery and an electronic device using the same, wherein in the method, the coordinate data of the agricultural machinery is processed and cleaned. When the coordinate data of the agricultural machinery appears repeatedly at different time points, only the coordinate data corresponding to one time point is retained. Therefore, the operation acres of the agricultural machinery working in repetitions is avoided, further, it is conducive to reducing the difference between the operation acres calculated by the method and the actual operation acres.

The present disclosure further provides a method for calculating operating acres of agricultural machinery and an electronic device using the same, wherein the method removes the coordinate data exceeding a coordinate data range of the agricultural machinery which is out of an operation area, processes and cleans the coordinate data of the agricultural machinery, avoids using abnormal data to calculate the operation acres of the agricultural machinery, and improves the accuracy of the operation acres calculated by the method.

The present disclosure further provides a method for calculating operating acres of agricultural machinery and an electronic device using the same, wherein the method clusters and segments the coordinate data and the time-point data of the agricultural machinery after cleaning. The data with low density and irregular time points in the segmented data are segmented into non-operation data, and the non-operation data is removed to ensure that the data used to calculate the operation acres are valid operation data of the agricultural machinery to further ensure calculation accuracy.

The present disclosure further provides a method for calculating operating acres of agricultural machinery and an electronic device using the same, wherein the method generates polygons of a plurality of operation areas based on the operation data after clustering and segmenting, and the operation acres of the agricultural machinery are calculated based on areas of the polygons.

The present disclosure further provides a method for calculating operating acres of agricultural machinery and an electronic device using the same, wherein the method aggregates all the polygons, takes out repeated polygons, and obtains multiple polygons cleaned and removed without repetition, so as to prevent one area of the same operation block of the agricultural machinery being calculated more than once.

The present disclosure further provides a method for calculating operating acres of agricultural machinery and an electronic device using the same, wherein the method converts the longitude data and latitude data of the agricultural machinery into two-dimensional coordinates by projection conversion, and the final operation area of the agricultural machinery is calculated based on the two-dimensional coordinates.

The present disclosure further provides a method for calculating operating acres of agricultural machinery and an electronic device using the same, wherein the method measures different types of farmland, and the measuring results are accurate, which is conducive to the cost settlement of the operators of the agricultural machinery, a calculation of national policy subsidies, and a national agricultural data statistic.

In order to achieve at least one of the above objects of the disclosure, the present disclosure provides a method for calculating operating acres of agricultural machinery, the method includes:

step A, obtaining coordinate data of the agricultural machinery and time-point data of the agricultural machinery corresponding to the coordinate data within a time period ;

step B, cleaning the coordinate data of the agricultural machine and the time-point data of the agricultural machine and removing the coordinate data and the time-point data of the agricultural machinery when not working in a normal operation state;

step C, clustering and segmenting the coordinate data and the time-point data after cleaning, distinguishing the coordinate data and the time-point data of the agricultural machinery when working in a normal operation state and when in a non-operation state, and retaining the coordinate data and the time-point data of the agricultural machinery only when working in the normal operation state;

step D, generating a plurality of polygons based on the coordinate data and the time-point data of the agricultural machinery working in the normal operation state, and calculating operation acres of the agricultural machinery according to the plurality of the polygons.

According to an embodiment of the present disclosure, wherein step B further includes:

step (B.1), removing repeated data from the coordinate data of the agricultural machinery and the time-point data of the agricultural machinery;

step (B.2), cleaning the coordinate data of the agricultural machinery and the time-point data of the agricultural machinery, and removing abnormal data from the coordinate data of the agricultural machinery and the time-point data of the agricultural machinery.

According to an embodiment of the present disclosure, step B.1 further includes:

step (b.1), sorting the coordinate data of the agricultural machinery in chronological order; and

step (b.2), removing duplicate data from the coordinate data of the agricultural machinery according to chronological order.

According to an embodiment of the present disclosure, step B.2 further includes:
presetting a coordinate range of the operation area, and removing the coordinate data which exceeds the coordinate range of the operation area, and the time-point data corresponding to the coordinate data.

According to an embodiment of the present disclosure, the coordinate range comprises ranges of the longitude and longitude data, the range of the longitude data being [- 90, 90], the range of the latitude data being [- 180, 180].

According to an embodiment of the present disclosure, step B.2 further includes:

performing detection of anomalies on the coordinate data of the agricultural machinery by an isolation forest algorithm, and removing the coordinate data which exceeds the coordinate range.

According to an embodiment of the present disclosure, step C further includes:
using T-DBSCAN algorithm to cluster and segment the coordinate data and the time-point data after cleaning, and obtaining a plurality of clustered data blocks.

According to an embodiment of the present disclosure, step C further includes:
adjusting time threshold $\tau$, density radius r, and density threshold $\varepsilon$ of the T-DBSCAN algorithm.

According to an embodiment of the present disclosure, step C further includes:
distinguishing between data of the agricultural machinery in a normal operation state and data of the agricultural machinery in a non-operation state according to data density and time regularity, the data with low data density and irregular time being the data of the agricultural machinery in a non-operation state.

According to an embodiment of the present disclosure, step D further includes:

step D. 1, using Graham Scan algorithm to search boundary of the coordinate data and the time-point data of each of operational cluster data blocks of the agricultural machinery to find polygons;

step D.2, using Buffer Union algorithm to aggregate each of the polygons, removing repeated area portions of the polygons, and generating multiple polygons without repetition;

step D.3, performing a projection conversion to longitude coordinates and latitude coordinates of vertices of each polygon to obtain a projected EPSG, and searching the EPSG by a least square algorithm to find an optimal projection coordinate system and converting the longitude coordinates and the latitude coordinates of vertices of each polygon into two-dimensional coordinates; and

step D.4, based on the two-dimensional coordinates of the polygon, using a formula

$$S = 1/2 \left| \sum_{i=1}^{n} \left( x_i y_{i+1} - x_{i+1} y_i \right) \right|$$

to calculate area of the polygons, and superposing the area of the polygons to obtain the operation acres of the agricultural machinery.

According to another aspect of the present disclosure, the present disclosure provides a system for calculating operation acres of agricultural machinery, the system includes:

a data acquisition module, the data acquisition module obtains coordinate data of an agricultural machinery and time-point data of the agricultural machinery corresponding to the coordinate data within a time period;

a data cleaning module communicated with the data acquisition module, wherein the data cleaning module cleans the coordinate data of the agricultural machine and the time-point data of the agricultural machine and removes the coordinate data and the time-point data of the agricultural machinery not in a normal operation state;

a cluster segmentation module communicated with the data cleaning module, wherein the cluster segmentation module clusters and segments the coordinate data and the time-point data after cleaning, distinguishes the coordinate data and the time-point data of the agricultural machinery in a normal operation state and a non-operation state, and retains the coordinate data and the time-point data of the agricultural machinery in the normal operation state as operational cluster data blocks;

a polygon generation module communicated with cluster segmentation module, wherein the polygon generation module generates a plurality of polygons based on the operational cluster data blocks; and

an area calculation module communicated with the polygon generation module, wherein the polygon generation module calculates the operation acres of the agricultural machinery according to the plurality of the polygons.

According to an embodiment of the present disclosure, the coordinate data of the agricultural machinery comprises longitude data and latitude data.

According to an embodiment of the present disclosure, the data cleaning module includes a duplicate data removal unit and an abnormal data removal unit, the duplicate data removal unit is connected to the data acquisition module, the duplicate data removal unit removes duplicate longitude data and duplicate latitude data of the agricultural machinery, and the abnormal data removal unit cleans the longitude data and the latitude data after removing duplicate longitude data and duplicate latitude data, and cleans the time-point data, and removes abnormal data from the longitude data, the latitude data, and the time-point data.

According to an embodiment of the present disclosure, the duplicate data removal unit sorts the longitude data and the latitude data in a chronological order, and retains the same longitude data and the same latitude data of single time point when same longitude data and same latitude data appear at different time points.

According to an embodiment of the present disclosure, the abnormal data removal unit presets a coordinate range of an operation area, and determines that the longitude data and the latitude data that is out of the coordinate range are abnormal data and removes the abnormal data.

According to an embodiment of the present disclosure, the coordinate range comprises a range of the longitude data and a range of the latitude data, the abnormal data removal unit presets the range of the longitude data as [- 90, 90] and presets the range of the latitude data as [- 180, 180].

According to another aspect of the present disclosure, the abnormal data removal unit performs an anomaly detection on the longitude data and the latitude data of the agricultural machinery by an isolation forest algorithm, removes the longitude data that is out of the range of the longitude data, and removes the latitude data that is out of the range of the latitude data.

According to an embodiment of the present disclosure, the cluster segmentation module comprises a cluster segmentation unit, a determination unit and an execution unit, the cluster segmentation unit is communicated with the data cleaning module, the determination unit is communicated with the cluster segmentation unit, the execution unit is communicated with the determination unit, the cluster segmentation unit clusters and segments the coordinate data and time-point data, and obtains a plurality of cluster data blocks, the determination unit determines the type of the cluster data blocks to distinguish non-operational cluster data blocks, and the execution unit removes the non-operational cluster data block, and obtains operational cluster data blocks.

According to an embodiment of the present disclosure, the cluster segmentation unit uses T-DBSCAN algorithm to cluster and segments the coordinate data and the time-point data after cleaning.

According to an embodiment of the present disclosure, the cluster segmentation unit adjusts time threshold $\tau$, density radius r, and density threshold $\varepsilon$ of the T-DBSCAN algorithm.

According to an embodiment of the present disclosure, the determination unit determines type of the cluster data blocks according to data density and time regularity, and the cluster data blocks with low data density and irregular time is non-operational cluster data blocks.

According to an embodiment of the present disclosure, the polygon generation module comprises a polygon generation unit and a duplicate checking unit, and the duplicate checking unit is connected to the polygon generation unit, the polygon generation unit is connected to the execution unit 33 of the cluster segmentation module, the polygon generation unit obtains boundary polygons corresponding to operational cluster data blocks according to the coordinate data and the time-point data of the operational cluster data blocks, and the duplicate checking unit aggregates the boundary polygons and removes repeated area portion of the boundary polygons, and generates a plurality of polygons without repetition.

According to an embodiment of the present disclosure, the polygon generation unit uses Graham Scan algorithm to search boundary of the coordinate data and the time-point data of each of the operational cluster data blocks to find polygons.

According to an embodiment of the present disclosure, the duplicate checking unit uses Buffer Union algorithm to aggregate each of the polygons, remove repeated area portion of the polygons, and generates multiple polygons without repetition.

According to an embodiment of the present disclosure, the area calculation module comprises a conversion unit and a calculation unit, and the conversion unit is connected to the duplicate checking unit of the polygon generation unit, and the calculation unit is connected to the conversion unit the conversion unit performs a projection conversion to longitude coordinates and latitude coordinates of vertices of each polygon to obtain a projected EPSG, and a calculation unit searches the EPSG by a least square algorithm to find an optimal projection coordinate system and converts longitude coordinates and latitude coordinates of vertices of each polygon into coordinates of two-dimensional coordinates; and based on the two-dimensional coordinates of the polygon, the calculation unit uses a formula

$$S = 1/2 \left| \sum_{i=1}^{n} \left( x_i y_{i+1} - x_{i+1} y_i \right) \right|$$

to calculate area of the polygons, and superposes the area of the polygons to obtain the operation acres of the agricultural machinery.

According to an embodiment of the present disclosure, the system further includes a storage device, the storage device stores the coordinate data, the time-point data, and the operation acres of the agricultural machinery.

## BRIEF DESCRIPTION OF THE DRAWINGS

Implementations of the present disclosure will now be described, by way of embodiments, with reference to the attached figures.

FIG. 1 is a flowchart of one embodiment of a method for calculating operable areas of agricultural machinery.
FIG. 2 is a partial flowchart of one embodiment of the method.
FIG. 3 is a partial flowchart of another embodiment of a method for calculating operation acres of agricultural machinery.
FIG. 4 is a partial flowchart of another embodiment of such method.
FIG. 5 is a block diagram of one embodiment of a system for calculating operation acres areas for agricultural machinery.

## DETAILED DESCRIPTION

The preferred embodiments described below are for example only, and technical personnel in the field can think of other obvious variant embodiments. The basic principles of the present invention as defined in the following description may be applied to other embodiments, developed embodiments, improvement schemes, equivalent schemes, and other technical schemes that do not deviate from the spirit and scope of the present invention.

The technical personnel in the art shall understand that, in the disclosure of the present invention, the term "portrait direction", "horizontal direction", "up", "down", "front", "back", "left", "right", "vertical", "horizontal", "top", "bottom", "inside", "outer" and other indicative orientation or positional relationship is based on the orientation or position relationship shown in the drawings, and is intended to facilitate the description of the present invention and simplify the description, rather than to indicate or imply that the device or component must have a specific orientation in a specific direction and operation, therefore, the above terms are not to be understood as limitations on the present invention.

Understandably, the term "one" should be understood as "at least one" or "one or more", i.e. in one embodiment, the quantity of one component may be one, while in another embodiment the quantity of components may be multiple, the term "one" cannot be understood as a limit on the quantity.

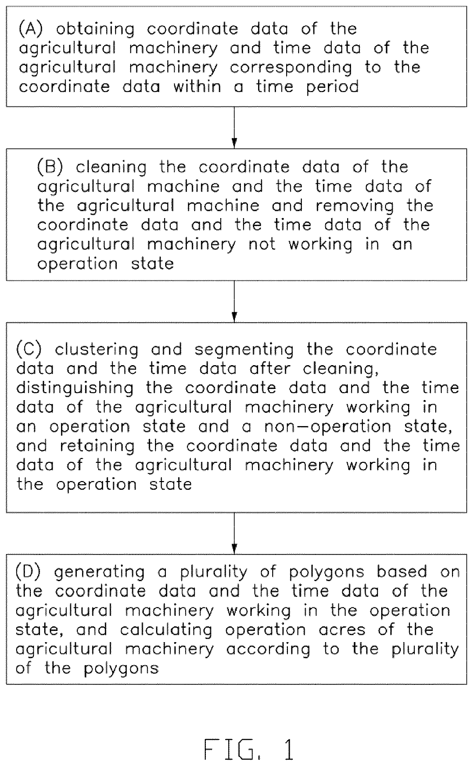

Referring to FIGS. 1 to 4 of the present disclosure, a method for calculating operation acres of agricultural machinery is illustrated. The operation acres of the agricultural machinery for farming purposes can be accurately calculated by the method. In addition, a system 100 for calculating operation acres of agricultural machinery is suitable for calculating areas of different types of farmlands, and the calculation is accurate, which is conducive to a cost settlement of the operators of the agricultural machinery, a calculation of national policy subsidies, a national agricultural data statistics, etc.

In the method for calculating operation acres of the agricultural machinery, step (A) is provided to obtain coordinate data and time-point data of the agricultural machinery within a time period in which the operation acres need to be calculated. In one embodiment, the coordinate data of the agricultural machinery can be longitude data and latitude data. In one embodiment, the coordinate data of the agricultural machinery may also be two-dimensional coordinate data. In one embodiment, taking the coordinate data of the agricultural machinery as comprising longitude and latitude data as an example, the method according to the present invention is described.

After step (A), step (B) is provided to clean the coordinate data and the time-point data of the agricultural machine and remove the coordinate data and the time-point data of the agricultural machinery when not working in a normal operation state.

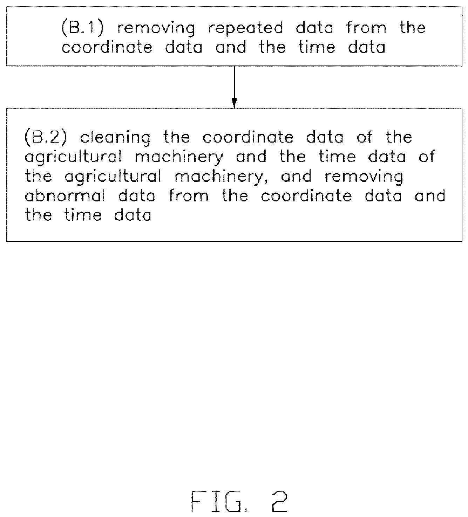

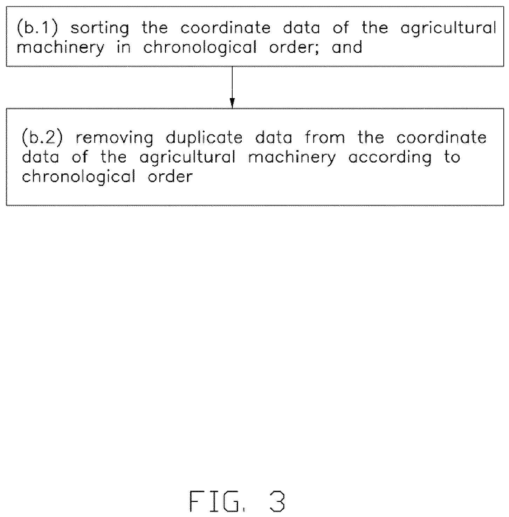

In one embodiment, referring to FIG.2, the step (B) further includes step (B.1), removing repeated coordinate data of the agricultural machine and repeated time-point data of the agricultural machinery, that is, removing the data of the agricultural machinery working in a repeated operation state. In one embodiment, referring to FIG. 3, the step (B.1) includes following steps:

step (b.1), sorting the coordinate data of the agricultural machinery in chronological order; and

step (b.2), removing duplicate data from the coordinate data of the agricultural machinery. In one embodiment, when the same longitude data and the same latitude data appear at different time points, and a copy of the same corresponding longitude data and the same latitude data at one time point are retained. In one embodiment, a copy of the same corresponding longitude data and the same latitude data at any time point are retained. by such an algorithm, the method can avoid calculating the operation acres of the agricultural machinery in repeated operation state, which is conducive to reducing the difference between the operation acres calculated by the method and the actual operation acres.

In one embodiment, the step (B) further includes step (B.2), cleaning the coordinate data and the time-point data of the agricultural machinery, and removing abnormal data. In one embodiment, a coordinate range of the operation area to be calculated is preset, and the longitude data and the latitude data beyond the coordinate range can be determined as abnormal data, which does not belong to the data of the agricultural machinery working in a normal operation state, and will not be used as a calculation basis for calculating the operation acres of the agricultural machinery. In one embodiment, an abnormal coordinate data and time-point data corresponding to the abnormal coordinate are removed to avoid using abnormal data to calculate the operation acres of the agricultural machinery, which is conducive to improving accuracy of the method.

In one embodiment, in the preset coordinate range, a range of the longitude data is [- 90, 90], and a range of the latitude data is [- 180, 180]. In one embodiment, an anomaly detection is performed on the longitude data and the latitude data of the agricultural machinery by an isolation forest algorithm, and remove the longitude data and the latitude data exceeding the range of the longitude data and the range of the latitude data. It should be understood by those skilled in the art that the embodiment of the preset coordinate range and the algorithm for anomaly detection are only used as examples and cannot limit the content and scope of the method of the present disclosure.

In one embodiment, step (B.1) is performed after step (B.2). In another embodiment, step (B.1) is performed before step (B.2). A specific sequence of step (B.1) and step (B.2) cannot limit the content and scope of the method of the present disclosure.

In one embodiment, the method further includes step (C), clustering and segmenting the coordinate data and the time-point data of the agricultural machinery after cleaning, distinguishing the coordinate data and the time-point data of the agricultural machinery working in a normal operation state and a non-operation state, and retaining the coordinate data and the time-point data of the agricultural machinery working in the normal operation state.

In one embodiment, the step (C) further includes: using T-DBSCAN algorithm to cluster and segment the coordinate data and the time-point data of the agricultural machinery after cleaning and obtaining a number of cluster data blocks. In one embodiment, for core parameters of the T-DBSCAN algorithm, time threshold $\tau$, density radius r, density threshold $\varepsilon$ are adjusted by Hyperopt algorithm to ensure a maximum relevance of similar data and a minimum relevance of non-similar data after clustering.

In one embodiment, the step (C) further includes: removing non-operational cluster data blocks in the cluster data blocks and retaining operational cluster data blocks. In one embodiment, each cluster data block obtained after segmenting ensures similarity in time and space. In one embodiment, if data density of the cluster data blocks is low and the time of cluster data blocks is irregular, the cluster data blocks are determined as the non-operational cluster data blocks. After the non-operational cluster data blocks are removed, the remaining cluster data blocks are the operational cluster data blocks, therefore, ensuring that the data used to calculate the operation acres of agricultural machinery are operational data, and further ensure accuracy of calculation.

In one embodiment, after step (C), the method further includes step (D), generating a number of polygons based on each of the operational cluster data blocks, and calculating the operation acres of the agricultural machinery according to the number of the polygons.

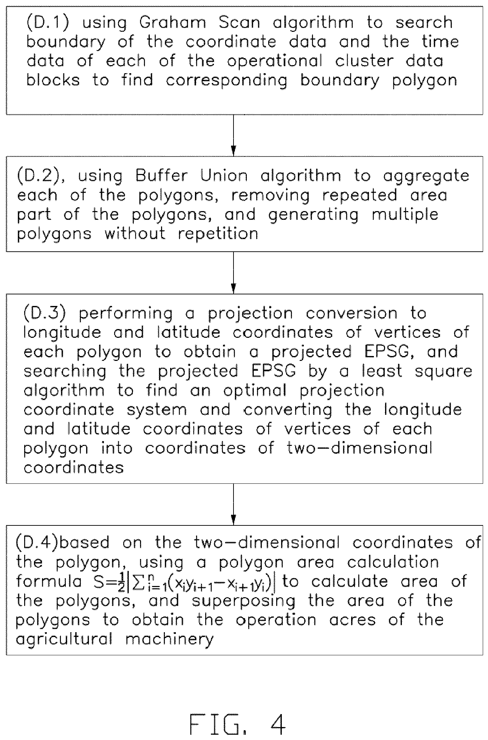

Referring to FIG.4, the step (D) includes step (D.1), using Graham Scan algorithm to search boundary of the coordinate data and the time-point data of each of the operational cluster data blocks to find polygons.

In one embodiment, after step (D.1), the method further includes step (D.2), using Buffer Union algorithm to aggregate each of the polygons, removing repeated area portion of the polygons, and generating multiple polygons without repetition.

In one embodiment, after step (D.2), the method further includes step (D.3), performing a projection conversion to longitude and latitude coordinates of vertices of each polygon to obtain a projected EPSG, and searching the projected EPSG by a least square algorithm to find an optimal projection coordinate system and converting the longitude and latitude coordinates of vertices of each polygon into coordinates of two-dimensional coordinates. In one embodiment, after step (D.3), the method further includes step (D.4), based on the two-dimensional coordinates of the polygon, using a polygon area calculation formula

$$S = 1/2 \left| \sum_{i=1}^{n} \left( x_i y_{i+1} - x_{i+1} y_i \right) \right|$$

to calculate area of the polygons, and superposing the area of the polygons to obtain the operation acres of the agricultural machinery.

It should be noted that there is little difference between the acres calculated by the method provided by present application and the actual operation acres of the agricultural machinery. In addition, in the process of R & D, in order to verify effectiveness of the method provided by present application, an acre counter is installed on a tractor to operate in the fields of 98 acres, 560 acres and 2200 acres respectively, and the tractor run on the fields by randomly walking and repeating operations of some fields at random. Each field is run out 10 groups of data, and the operation acres of the tractor is calculated by the method for calculating operation acres of the agricultural machinery provided by the present application. A checking calculation result show that error means and variances of 10 groups of data per acres of each field by using the method of the application are 99.7% / 0.03, 99.5/0.06 and 99.8/0.01 respectively. Therefore, the method for calculating operation acres of the agricultural machinery according to the present application has high accuracy and stability and has met accurate calculation requirement.

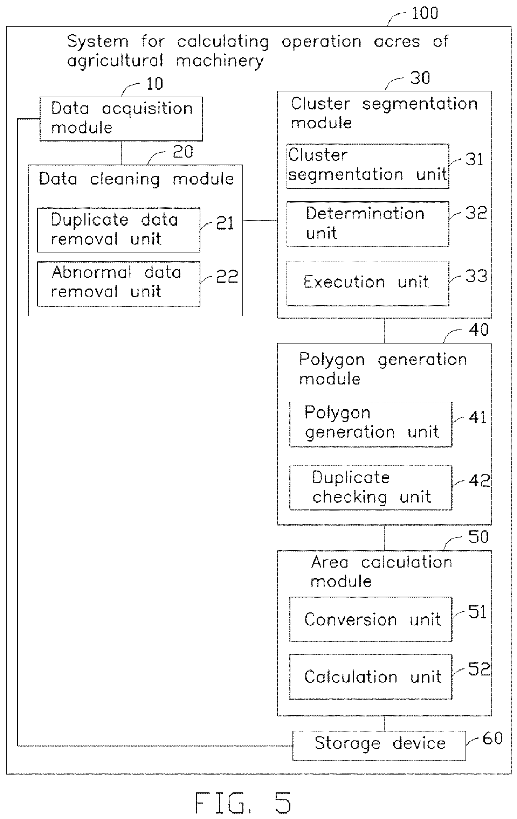

Referring to FIG.5 of the present disclosure, a system 100 for calculating operation acres of agricultural machinery included in an electronic device 1 is illustrated. The operation acres of the agricultural machinery can be accurately calculated by the system 100. The system 100 includes a data acquisition module 10, a data cleaning module 20, a cluster segmentation module 30, a polygon generation module 40 and an area calculation module 50. The data acquisition module 10 acquires the coordinate data and the time-point data of the agricultural machinery. The data cleaning module 20 is connected to the data acquisition module 10, and cleans the coordinate data and the time-point data of the agricultural machinery to remove the data that acquired when the agricultural machinery works in a non-operation state. The cluster segmentation module 30 is connected to the data cleaning module 20. The cluster segmentation module 30 performs cluster segmentation on the coordinate data and the time-point data after cleaning, and obtains an operational cluster data blocks of the agricultural machinery working in the normal operation state. The polygon generation module 40 is connected to the cluster segmentation module 30, and the polygon generation module 40 generates corresponding polygons based on the operational cluster data blocks obtained by the cluster segmentation module 30. The area calculation module 50 is connected to the polygon generation module 40, and the area calculation module 50 calculates the operation acres of the agricultural machinery based on the area of the polygons generated by the polygon generation module 40.

In one embodiment, the data acquisition module 10 obtains the coordinate data and the time-point data of the agricultural machinery corresponding to the coordinate data in a time period when calculating operation acres of the agricultural machinery by communicably a central control computer of the agricultural machinery. For example, the data acquisition module 10 obtains the coordinate data and the time-point data of the agricultural machinery by the central control computer connected to the agricultural machinery by a wired connection or a wireless connection. In one embodiment, the data acquisition module 10 allows the user to input the coordinate data and the time-point data of the agricultural machinery by manual input or manual selection. Those skilled in the art should understand that the embodiment of the data acquisition module 10 acquiring the coordinate data and the time-point data of the agricultural machinery is only an example and cannot limit the content and scope of the method provided by the present application.

In one embodiment, the coordinate data of the agricultural machinery can be longitude data and latitude data. In one embodiment, the coordinate data of the agricultural machinery may also be two-dimensional coordinate data. In one embodiment, taking the coordinate data of the agricultural machinery as longitude data and latitude data as an example, the system according to the present invention is described.

In one embodiment, the data cleaning module 20 includes a duplicate data removal unit 21 and an abnormal data removal unit 22. The duplicate data removal unit 21 is connected to the data acquisition module 10. The duplicate data removal unit 21 obtains the coordinate data and the time-point data of the agricultural machinery.

In one embodiment, the duplicate data removal unit 21 sorts the coordinate data of the agricultural machinery in chronological order, and removes the duplicate coordinate data of the agricultural machinery. In one embodiment, when the same longitude data and the same latitude data appear at different time points, and a copy of the same corresponding longitude data and the same latitude data at one time point are retained by the duplicate data removal unit 21. In one embodiment, when the duplicate data removal unit 21 determines that the longitude data and the latitude data of the agricultural machinery are duplicate, the duplicate data removal unit 21 retains the data at earliest time point and removes the duplicate data. In one embodiment, when the duplicate data removal unit 21 determines that the longitude data and the latitude data of the agricultural machinery are duplicate, the duplicate data removal unit 21 retains the longitude data and the latitude data corresponding to any time point and removes the duplicate data.

In one embodiment, the abnormal data removal unit 22 is connected to the duplicate data removal unit 21, and the abnormal data removal unit 22 cleans the coordinate data and the time-point data of the agricultural machinery after removing the duplicate data to remove abnormal data. In one embodiment, the abnormal data removal unit 22 preset a coordinate range of the operation area for calculating the operation acres. When the coordinate data of the agricultural machinery exceeds the coordinate range, the abnormal data removal unit 22 determines that the longitude data and the latitude data exceeding the coordinate range are abnormal data, and removes the abnormal data, which is not used as a calculation basis for calculating the operation acres of the agricultural machinery.

In one embodiment, the abnormal data removal unit 22 presets a range of longitude data as [-90, 90], and presets a range of latitude data as [-180, 180]. In one embodiment, the abnormal data removal unit 22 performs an anomaly detection on the longitude data and the latitude data of the agricultural machinery by an isolation forest algorithm, and removes the longitude data exceeding the range of the longitude data and removes the latitude data exceeding the range of the latitude data. It should be understood by those skilled in the art that the embodiment of the preset coordinate range and the isolation forest algorithm for abnormal data detection are only used as examples and cannot be a limitation on the content and scope of the system 100 for calculating operation acres of the agricultural machinery of the present application.

In one embodiment, the abnormal data removal unit 22 is connected to the data acquisition module 10, the abnormal data removal unit 22 obtains the coordinate data and the time-point data of the agricultural machinery, and the abnormal data removal unit 22 cleans the coordinate data and the time-point data of the agricultural machinery to remove the abnormal data. In one embodiment, the duplicate data removal unit 21 removing duplicate data from the coordinate data and the time-point data of the agricultural machinery after removing the abnormal data.

In one embodiment, the cluster segmentation module 30 includes a cluster segmentation unit 31, a determination unit 32 and an execution unit 33. In one embodiment, the cluster segmentation unit 31 is connected to the data cleaning module 20. The cluster segmentation unit 31 clusters and segments the coordinate data and the time-point data of the agricultural machinery, and obtains a number of cluster data blocks. The determination unit 32 is connected to the cluster segmentation unit 31. The determination unit 32 determines type of the cluster data blocks and distinguishes operational cluster data block and non-operational cluster data blocks. The operational cluster data blocks corresponds to operation data of the agricultural machinery wording in the normal operation state, and the non-operational cluster data block corresponds to the operation data of the agricultural machinery working in the non-operation state. Further, the execution unit 33 is connected to the determination unit 32, and the execution unit 33 removes the non-operational cluster data blocks and obtains the operational cluster data blocks.

In one embodiment, the cluster segmentation unit 31 uses T-DBSCAN algorithm to cluster and segment the coordinate data and the time-point data of the agricultural machinery after cleaning, and obtains a number of cluster data blocks. In one embodiment, for core parameters of the T-DBSCAN algorithm, time threshold τ, density radius r, density threshold ε are adjusted by Hyperopt algorithm to ensure a maximum relevance of similar data and a minimum relevance of non-similar data after clustering.

In one embodiment, the determination unit 32 determines and segments the types of the clustering data blocks based on density and regularity of the data. In one embodiment, the cluster data blocks with low data density and irregular time are determined as a non-operational cluster data block, and the cluster data blocks with high data density and regular time is determined as an operational cluster data block.

The polygon generation module 40 is connected to the execution unit 33, and the polygon generation module 40 includes a polygon generation unit 41 and a duplicate checking unit 42, and the duplicate checking unit 42 is connected to the polygon generation unit 41. The polygon generation unit 41 is connected to the execution unit 33 of the cluster segmentation module 30.

The polygon generation unit 41 obtains boundary polygons corresponding to the operational cluster data blocks based on the coordinate data and the time-point data of each of the cluster data blocks. In one embodiment, the polygon generation unit 41 uses Graham Scan algorithm to search the boundary of the coordinate data and the time-point data of each of the operational cluster data blocks to find the corresponding boundary polygons.

In one embodiment, the duplicate checking unit 42 aggregates the boundary polygons generated by the polygon generation unit 41, removes repeated area portion of the boundary polygons, and generates a number of polygons without repetition. In one embodiment, the duplicate checking unit 42 aggregates each of the boundary polygons by using Buffer Union algorithm, removes the repeated area portion of the boundary polygons, and generates the number of the polygons without repetition.

In one embodiment, the area calculation module 50 is connected to the duplicate checking unit 42 of the polygon generation module 40. The area calculation module 50 calculates the area of each of polygons and superimposes the area of all polygons to obtain the operation acres of the agricultural machinery.

In one embodiment, the area calculation module 50 includes a conversion unit 51 and a calculation unit 52. The conversion unit 51 is connected to the duplicate checking unit 42 of the polygon generation unit 40, and the calculation unit 52 is connected to the conversion unit 51.

In one embodiment, the conversion unit 51 performs a projection conversion to longitude coordinates and latitude coordinates of vertices of each polygon to obtain a projected EPSG, and searches the projected EPSG by a least square algorithm to find an optimal projection coordinate system and converts the longitude and latitude coordinates of vertices of each polygon into coordinates of two-dimensional coordinates. In one embodiment, the calculation unit 52 uses a polygon area calcu-

$$S = 1/2 \left| \sum_{i=1}^{n} \left( x_i y_{i+1} - x_{i+1} y_i \right) \right|$$

lation formula to calculate the area of the polygons based on the two-dimensional coordinates of the polygon, and superposes the area of the polygons to obtain the operation acres of the agricultural machinery.

In one embodiment, the system 100 for calculating operation acres of the agricultural machinery further comprises a storage device 60. The system 100 is applied in an electronic device 1. The storage device 60 is connected to the area calculation module 50 and the data acquisition module 10. The storage device 60 stores the coordinate data, the time-point data and corresponding operation acres of the agricultural machinery, which can be convenient for subsequent users to directly view and call.

In one embodiment, the word "module" or "unit" as used herein, refers to logic embodied in hardware or firmware, or to a collection of software instructions, written in a programming language, such as, for example, Java, C, or assembly. One or more software instructions in the function modules may be embedded in firmware. It will be appreciated that the function modules may include connected logic modules, such as gates and flip-flops, and may include programmable modules, such as programmable gate arrays or processors. The function module described herein may be implemented as either software and/or hardware modules and may be stored in a storage device.

Those skilled in the art should understand that the above description and the embodiments of the present disclosure shown in the drawings are only examples and do not limit the present disclosure. The purpose of the present disclosure has been completely and effectively achieved. The function and structure principle of the present disclosure have been shown and explained in the embodiments. Without departing from the principle, the implementation of the present disclosure may have any deformation or modification.

**Claims**

1. A method for calculating operation acres of agricultural machinery, comprising:

obtaining coordinate data of the agricultural machinery and time-point data corresponding to the coordinate data within a time period;
cleaning the coordinate data and the time-point data, and removing the coordinate data and the time-point data in an abnormal operation state;
clustering and segmenting the coordinate data and the time-point data after cleaning, distinguishing the coordinate data and the time-point data in a normal operation state and a non-operation state, and retaining coordinate data and time-point data in the normal operation state; and

generating a plurality of polygons based on the coordinate data and the time-point data in the normal operation state, and calculating operation acres of the agricultural machinery according to the plurality of the polygons.

2. The method for calculating operation acres of agricultural machinery according to claim 1, wherein cleaning the coordinate data and the time-point data, and removing the coordinate data and the time-point data in an abnormal operation state comprises:

removing repeated data from the coordinate data and the time-point data; cleaning the coordinate data and the time-point data, and removing abnormal data from the coordinate data and the time-point data.

3. The method for calculating operation acres of agricultural machinery according to claim 2, wherein removing repeated data from the coordinate data and the time-point data comprises:

sorting the coordinate data in a chronological order; and removing duplicate data from the coordinate data according to the chronological order.

4. The method for calculating operation acres of agricultural machinery according to claim 2, wherein cleaning the coordinate data and the time-point data, and removing abnormal data from the coordinate data and the time-point data comprises:
presetting a coordinate range of an operation area, removing coordinate data that is out of the coordinate range of the operation area, and removing the time-point data corresponding to the removed coordinate data.

5. The method for calculating operation acres of agricultural machinery according to claim 4, wherein:

the coordinate range comprises a range of the longitude data and a range of the latitude data; and
the range of the longitude data is [- 90, 90], and the range of the latitude data is [- 180, 180].

6. The method for calculating operation acres of agricultural machinery according to claim 2, wherein cleaning the coordinate data and the time-point data, and removing abnormal data from the coordinate data and the time-point data comprises:
performing an anomaly detection on the coordinate data by an isolation forest algorithm, and removing the coordinate data that is out of a coordinate range.

7. The method for calculating operation acres of agricultural machinery according to claim 1, wherein clustering and segmenting the coordinate data and the time-point data after cleaning, distinguishing the coordinate data and the time-point data in the normal operation state and the non-operation state, and retaining coordinate data and time-point data in the normal operation state comprises:
using T-DBSCAN algorithm to cluster and segment the coordinate data and the time-point data after cleaning, and obtaining a plurality of cluster data blocks.

8. The method for calculating operation acres of agricultural machinery according to claim 1, wherein clustering and segmenting the coordinate data and the time-point data after cleaning, distinguishing the coordinate data and the time-point data in the normal operation state and the non-operation state, and retaining coordinate data and time-point data in the normal operation state comprises:
adjusting a time threshold $\tau$, a density radius r, and a density threshold $\varepsilon$ of the T-DBSCAN algorithm.

9. The method for calculating operation acres of agricultural machinery according to claim 8, wherein clustering and segmenting the coordinate data and the time-point data after cleaning, distinguishing the coordinate data and the time-point data in the normal operation state and the non-operation state, and retaining coordinate data and time-point data in the normal operation state further comprises:
distinguishing data in the normal operation state and data in the non-operation state according to data density and time regularity, the data with low data density and irregular time being the data in the non-operation state.

10. The method for calculating operation acres of agricultural machinery according to claim 1, wherein generating a plurality of polygons based on the coordinate data and the time-point data in the normal operation state, and calculating operation acres of the agricultural machinery according to the plurality of the polygons comprises:

searching boundary of the coordinate data and the time-point data of each of operational cluster data blocks by using a Graham Scan algorithm, and acquiring polygons; aggregating each of the polygons by using a Buffer Union algorithm, removing repeated area portion of the polygons, and generating a plurality of polygons without repetition; performing a projection conversion to longitude coordinates and latitude coordinates of vertices of each polygon, obtaining a projected EPSG, and searching the EPSG by a least square algorithm to find an optimal projection coordinate system and converting the longitude coordinates and the latitude coordinates of vertices of each polygon into coordinates of two-dimensional coordinates; and

based on the two-dimensional coordinates of the polygon, using a formula

$$S = 1/2 \left| \sum_{i=1}^{n} \left( x_i y_{i+1} - x_{i+1} y_i \right) \right|$$ to calculate area of the polygons, and superposing the area of the polygons to obtain the operation acres of the agricultural machinery.

11. A system for calculating operation acres of agricultural machinery comprising:

a data acquisition module, the data acquisition module obtains coordinate data of an agricultural machinery and time-point data of the agricultural machinery corresponding to the coordinate data within a time period;

a data cleaning module communicated with the data acquisition module, wherein the data cleaning module cleans the coordinate data of the agricultural machine and the time-point data of the agricultural machine and removes the coordinate data and the time-point data of the agricultural machinery not in a normal operation state;

a cluster segmentation module communicated with the data cleaning module, wherein the cluster segmentation module clusters and segments the coordinate data and the time-point data after cleaning, distinguishes the coordinate data and the time-point data of the agricultural machinery in a normal operation state and a non-operation state, and retains the coordinate data and the time-point data of the agricultural machinery in the normal operation state as operational cluster data blocks;

a polygon generation module communicated with cluster segmentation module, wherein the polygon generation module generates a plurality of polygons based on the operational cluster data blocks; and

an area calculation module communicated with the polygon generation module, wherein the polygon generation module calculates the operation acres of the agricultural machinery according to the plurality of the polygons.

12. The system for calculating operation acres of agricultural machinery according to claim 11, wherein the coordinate data of the agricultural machinery comprises longitude data and latitude data.

13. The system for calculating operation acres of agricultural machinery according to claim 12, wherein the data cleaning module includes a duplicate data removal unit and an abnormal data removal unit, the duplicate data removal unit is connected to the data acquisition module, the duplicate data removal unit removes duplicate longitude data and duplicate latitude data of the agricultural machinery, and the abnormal data removal unit cleans the longitude data and the latitude data after removing duplicate longitude data and duplicate latitude data, and cleans the time-point data, and removes abnormal data from the longitude data, the latitude data, and the time-point data.

14. The system for calculating operation acres of agricultural machinery according to claim 13, wherein the duplicate data removal unit sorts the longitude data and the latitude data in a chronological order, and retains the same longitude data and the same latitude data of single time point when same longitude data and same latitude data appear at different time points.

15. The system for calculating operation acres of agricultural machinery according to claim 14, wherein the abnormal data removal unit presets a coordinate range of an operation area, and determines that the longitude data and the latitude data that is out of the coordinate range are abnormal data and removes the abnormal data.

16. The system for calculating operation acres of agricultural machinery according to claim 11, wherein the cluster segmentation module comprises a cluster segmentation unit, a determination unit and an execution unit, the cluster segmentation unit is communicated with the data cleaning module, the determination unit is communicated with the cluster segmentation unit, the execution unit is communicated with the determination unit, the cluster segmentation unit clusters and segments the coordinate data and time-point data, and obtains a plurality of cluster data blocks, the determination unit determines the type of the cluster data blocks to distinguish non-operational cluster data blocks, and the execution unit removes the non-operational cluster data block, and obtains operational cluster data blocks.

17. The system for calculating operation acres of agricultural machinery according to claim 16, wherein the determination unit determines type of the cluster data blocks according to data density and time regularity, and the cluster data blocks with low data density and irregular time is non-operational cluster data blocks.

18. The system for calculating operation acres of agricultural machinery according to claim 16, wherein the polygon generation module comprises a polygon generation unit and a duplicate checking unit, and the duplicate checking unit is connected to the polygon generation unit, the polygon generation unit is connected to the execution unit 33 of the cluster segmentation module, the polygon generation unit obtains boundary polygons corresponding to operational cluster data blocks according to the coordinate data and the time-point data of the operational cluster data blocks, and the duplicate checking unit aggregates the boundary polygons and removes repeated area portion of the boundary polygons, and generates a plurality of polygons without repetition.

19. The system for calculating operation acres of agricultural machinery according to claim 18, wherein the polygon generation unit uses Graham Scan algorithm to search boundary of the coordinate data and the time-point data of each of the operational cluster data blocks to find polygons.

20. The system for calculating operation acres of agricultural machinery according to claim 19, wherein the duplicate checking unit uses Buffer Union algorithm to aggregate each of the polygons, remove repeated area portion of the polygons, and generates multiple polygons without repetition.

21. The system for calculating operation acres of agricultural machinery according to claim 19, wherein the area calculation module comprises a conversion unit and a calculation unit, and the conversion unit is connected to the duplicate checking unit of the polygon generation unit, and the calculation unit is connected to the conversion unit the conversion unit performs a projection conversion to longitude coordinates and latitude coordinates of vertices of each polygon to obtain a projected EPSG, and a calculation unit searches the EPSG by a least square algorithm to find an optimal projection coordinate system and converts longitude coordinates and latitude coordinates of vertices of each polygon into coordinates of two-dimensional coordinates; and based on the two-dimensional coordinates of the polygon, the calculation unit uses a formula

$$S = 1/2 \left| \sum_{i=1}^{n} \left( x_i y_{i+1} - x_{i+1} y_i \right) \right|$$ to calculate area of the polygons, and superposes the area of the polygons to obtain the operation acres of the agricultural machinery.

22. The system for calculating operation acres of agricultural machinery according to claim 21, further comprising:
a storage device, wherein the storage device stores the coordinate data, the time-point data, and the operation acres of the agricultural machinery.

(A) obtaining coordinate data of the agricultural machinery and time data of the agricultural machinery corresponding to the coordinate data within a time period

(B) cleaning the coordinate data of the agricultural machine and the time data of the agricultural machine and removing the coordinate data and the time data of the agricultural machinery not working in an operation state

(C) clustering and segmenting the coordinate data and the time data after cleaning, distinguishing the coordinate data and the time data of the agricultural machinery working in an operation state and a non-operation state, and retaining the coordinate data and the time data of the agricultural machinery working in the operation state

(D) generating a plurality of polygons based on the coordinate data and the time data of the agricultural machinery working in the operation state, and calculating operation acres of the agricultural machinery according to the plurality of the polygons

FIG. 1

(B.1) removing repeated data from the coordinate data and the time data

(B.2) cleaning the coordinate data of the agricultural machinery and the time data of the agricultural machinery, and removing abnormal data from the coordinate data and the time data

FIG. 2

(b.1) sorting the coordinate data of the agricultural machinery in chronological order; and

(b.2) removing duplicate data from the coordinate data of the agricultural machinery according to chronological order

FIG. 3

(D.1) using Graham Scan algorithm to search boundary of the coordinate data and the time data of each of the operational cluster data blocks to find corresponding boundary polygon

(D.2), using Buffer Union algorithm to aggregate each of the polygons, removing repeated area part of the polygons, and generating multiple polygons without repetition

(D.3) performing a projection conversion to longitude and latitude coordinates of vertices of each polygon to obtain a projected EPSG, and searching the projected EPSG by a least square algorithm to find an optimal projection coordinate system and converting the longitude and latitude coordinates of vertices of each polygon into coordinates of two-dimensional coordinates

(D.4) based on the two-dimensional coordinates of the polygon, using a polygon area calculation formula $S=\frac{1}{2}\left|\sum_{i=1}^{n}(x_i y_{i+1}-x_{i+1}y_i)\right|$ to calculate area of the polygons, and superposing the area of the polygons to obtain the operation acres of the agricultural machinery

FIG. 4

FIG. 5

Europäisches
Patentamt

European
Patent Office

Office européen
des brevets

# EUROPEAN SEARCH REPORT

Application Number

EP 21 21 8418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 036 572 A (UNIV CHINA AGRICULTURAL) 11 August 2017 (2017-08-11) * abstract; figure 1 * * claims 6-10 * * paragraphs [0050] – [0117] * | 1-22 | INV. G06Q50/02 G06Q10/06 ADD. A01B79/00 |
| X | CN 107 766 808 A (BEIJING HONGDAJIUTONG TECH DEVELOPMENT CO LTD) 6 March 2018 (2018-03-06) * paragraphs [0002] – [0004] * * paragraphs [0075] – [0169] * | 1-22 | |
| A | CN 110 132 215 A (FJ DYNAMICS TECH RESEARCH INSTITUTE CHANGZHOU CO LTD) 16 August 2019 (2019-08-16) * abstract * * paragraphs [0076] – [0140] * | 1-22 | |
| A | CN 107 657 637 A (UNIV CHINA AGRICULTURAL) 2 February 2018 (2018-02-02) * abstract; claims 1-10 * * paragraphs [0030] – [0069] * | 1-22 | |

TECHNICAL FIELDS
SEARCHED       (IPC)

A01B
G01B
G06Q

The present search report has been drawn up for all claims

| Place of search | Date of completion of the search | Examiner |
|---|---|---|
| The Hague | 22 June 2022 | Pfyffer, Gregor |

EPO FORM 1503 03.82 (P04C01)

## ANNEX TO THE EUROPEAN SEARCH REPORT
## ON EUROPEAN PATENT APPLICATION NO.

EP 21 21 8418

22-06-2022

| Patent document cited in search report | | Publication date | Patent family member(s) | Publication date |
|---|---|---|---|---|
| CN 107036572 | A | 11-08-2017 | NONE | |
| CN 107766808 | A | 06-03-2018 | NONE | |
| CN 110132215 | A | 16-08-2019 | NONE | |
| CN 107657637 | A | 02-02-2018 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110128125